Europäisches Patentamt

European Patent Office

Office européen des brevets

(19)

(11) Veröffentlichungsnummer: **0 350 858**
**A1**

## (12) EUROPÄISCHE PATENTANMELDUNG

(21) Anmeldenummer: 89112656.7

(22) Anmeldetag: 11.07.89

(51) Int. Cl.⁴: **C22B 3/26 , C22B 3/38 ,
//C22B23:00**

(30) Priorität: 11.07.88 AT 1793/88

(43) Veröffentlichungstag der Anmeldung:
17.01.90 Patentblatt 90/03

(84) Benannte Vertragsstaaten:
**AT CH DE FR GB LI NL**

(71) Anmelder: **M&T CHEMICALS GMBH
Galvanotechnik Spezialchemikalien
Vor dem Lauch 10
D-7000 Stuttgart 80(DE)**

(72) Erfinder: **Marr, Rolf
Neue-Welt-Höhe 33
A-8042 Graz(AT)**
Erfinder: **Lackner, Heinz
Kindtalstrasse 8
A-8650 Kindberg(AT)**
Erfinder: **Bart, Hans-Jörg
Papiermühlgasse 38
A-8020 Graz(AT)**

(74) Vertreter: **Andrae, Steffen, Dr. et al
Steinstrasse 44
D-8000 München 80(DE)**

(54) **Verfahren zur Abtrennung von Nickel aus Nickelionen enthaltenden verdünnten wässrigen Lösungen.**

(57) Verfahren zur Abtrenung von Nickel aus Nickelionen enthaltenden verdünnten wäßrigen Lösungen mittels einer einen gelösten Ionenaustauscher enthaltenden organischen Extrahierphase, insbesondere einer Lösung von Bis-(2-ethylhexyl)dithiophosphorsäure in einem aromatischen oder aliphatischen Kohlenwasserstoff, bei dem die wäßrige Lösung in einer konventionellen Extrahierapparatur, gegebenenfalls in mehreren Stufen, mit der organischen Extrahierphase behandelt wird, wonach die wäßrige Phase von der organischen Extrahierphase getrennt und die letztere zur Gewinnung einer aufkonzentrierten wäßrigen Lösung eines Nickelsalzes und einer regenerierten Extrahierphase mit einer Abstreifsäure behandelt wird, wobei die Behandlung der beladenen Extrahierphase mit der Abstreifsäure, insbesondere Schwefelsäure, in einem Homogenisator erfolgt. Zur Hemmung der Phasentrennung der im Homogenisator gebildeten Emulsion wird der Extrahierphase vorzugsweise ein Gehalt an einem Emulsionsbildner zugesetzt, und die gebildete Emulsion wird in einem herkömmlichen Emulsionsspalter in regenerierte Extrahierphase und wäßrige Nickelsulfatlösung gespalten.

EP 0 350 858 A1

Die Abtrennung von Nickel aus verdünnten Lösungen, wie z.B. Waschwasser der Galvanikindustrie oder andere nickelhältige Abwässer, kann mit bekannten Techniken erfolgen. Es bieten sich dazu Verdunstung, Elektrolyse, Fällung, Zementation, Membranverfahren, Extraktion mit Austauscherharzen oder Lösungsmittelextraktion an /1/. Bei komplex zusammengesetzten Eingangslösungen und schwierigen Trennungen ist in der Regel die Lösungsmittelextraktion die betriebswirtschaftlichste Variante, wenn es darumgeht, ein günstig weiterverarbeitbares Konzentrat zu erhalten /2/.

Die Zielsetzung des Verfahrens ist, ein Abwasser zu erhalten, das den Begrenzungen von Abwasseremissionen entspricht /3/ und dabei gleichzeitig ein weiterverwendbares Produkt und keine Deponieprodukte zu gewinnen. Verdunstung, Elektrolyse, Fällung, Zementation und Ionentauscherharze sind bei niedrig konzentrierten Einsatzlösungen entweder zu teuer oder unselektiv oder liefern nur ein Deponieprodukt. Membranverfahren haben den Nachteil, daß sie osmotischen Wassertransport zulassen und somit den Produktstrom verdünnen /4/. Darunter leidet die Wirtschaftlichkeit des Prozesses.

Die Lösungsmittelextraktion kennt keine osmotische Verdünnung der Produktphase. Es können beliebige Ionentauscher verwendet werden, wodurch eine hohe Flexibilität gewährleistet ist. Zur Nickelextraktion müssen selektive, flüssige Ionentauscher, wie Thiophosphorsäuren, insbesondere die Bis-(2-ethylhexyl)-dithio-phosphorsäure, verwendet werden. Aus der Österr. Patentschift A 1763/87 geht hervor, daß dieser Ionentauschertyp in einem üblichen Regenerierapparat mit HCl regenerierbar ist und nicht mit $H_2O_4$. Eine Abstreifung des Metalles aus der organischen Extraktionsphase mit Schwefelsäure ist jedoch wünschenswert, da Metallsulfatlösungen besser weiterverwertbar sind.

Der Einsatz anderer Ionentauscher als der der Thio-phosphorsäu ren ist nicht zielführend. Thiophosphorsäuren sind starke Ionentauscher und auch bei niedrigen Einsatz-pH-Werten verwendbar. Andere Ionentauscher benötigen eine Neutralisation der Einsatzlösung, was kostengünstig ist /5, 6/.

Es ist Aufgabe der vorliegenden Erfindung, ein Verfahren zur Abtrennung von Nickel aus Nickelionen enthaltenden verdünnten wäßrigen Lösungen unter Gewinnung einer auf vorteilhafte Weise verwertbaren aufkonzentrierten wäßrigen Nickelsalzlösung so auszugestalten, daß die Vorteile einer verfahrenstechnisch einfachen konventionellen Extraktion einer wäßrigen Lösung mit einer organischen Extrahierphase genutzt werden können und daß die Rückgewinnung des extrahierten Nickels in Form einer aufkonzentrierten wäßrigen Nickelsalzlösung mit einem wirtschaftlich vertretbaren Zeit- und Arbeitsaufwand ermöglicht wird.

Diese Aufgabe wird bei einem Verfahren zur Abtrennung von Nickel aus Nickelionen enthaltenden verdünnten wäßrigen Lösungen mittels einer einen gelösten Ionenaustauscher enthaltenden organischen Extrahierphase, bei dem die wäßrige Lösung in einer konventionellen Extrahierapparatur, gegebenenfalls in mehreren Stufen, mit der organischen Extrahierphase behandelt wird, wonach die wäßrige Phase von der organischen Extrahierphase getrennt und die letztere zur Gewinnung einer aufkonzentrierten wäßrigen Lösung eines Nickelsalzes und einer regenerierten Extrahierphase mit einer Abstreifsäure behandelt wird, erfindungsgemäß dadurch gelöst, daß die Behandlung der beladenen Extrahierphase mit der Abstreifsäure in einem Homogenisator erfolgt.

Vorteilhafte Ausgestaltungen des Verfahrens sind in den Unteransprüchen 2 bis 7 wiedergegeben.

Es konnte festgestellt werden, daß die Hemmung der Regenerierung des Ionentauschers mit Schwefelsäure in der Kinetik des Reextraktionsprozesses zu finden ist (s. Tab. 1). Die Kinetik dieser heterogenen Grenzflächenreaktion kann verbessert werden, indem man die Phasengrenzfläche, d.h. den Reaktionsort, vergrößert. Die Vergrößerung der Phasengrenzfläche erfolgt parallel mit der Vergrößerung der Tropfenoberfläche der Extraktionsphase und stößt in konventionellen Extrahierapparaten (Mischer-Abscheider oder Kolonnen) auf Grenzen.

Das Neue und Erfinderische des Verfahrens besteht darin, daß man eine thio-phosphorsäurehältige Extrahierphase in einem Homogenisator mit Abstreifsäure vermengt und dadurch Mikrotröpfchen und eine extrem hohe Austauschfläche erhält. Damit kann die Kinetik der Regenerierung soweit verbessert werden, daß eine technische Durchführbarkeit gegeben ist. Die Homogenisierung kann in konventionellen dynamischen oder statischen Homogenisatoren erfolgen. Vorzuziehen sind statische Homogenisatoren wie der Typ, der in der Österr. Patentschrift A 1761/87 /7/ näher beschrieben wird. Er eignet sich auf Grund seiner speziellen Konstruktion hervorragend für korrosive Medien und ist daher problemlos mit Säuren, wie Schwefelsäure, beaufschlagbar.

Die Kontaktzeit der Phasen in jedem beliebigen Homogenisatortyp liegt im Sekundenbereich. Nach dem Verlasses des Homogenisators zufällt eine unstabilisierte Emulsion großteils und trennt sich teilweise im Schwerefeld, sodaß drei Phasen, nämlich Regeneriersäure, Extrahierphase und Emulsionsphase erhalten werden. Diese Trennung ist vorerst unerwünscht, da die Emulsion eine Stabilität im Minutenbereich haben soll, da ansonsten die Wirksamkeit der Abstreifung nicht gegeben ist (s. Tab. 1). Es ist daher notwendig, der Extrahierphase eine tensidische Komponente beizu geben, die die Emulsion kurz stabilisieren kann. Als solche kann ein Polyamin ECA 4360 der Firma Esso verwendet werden.

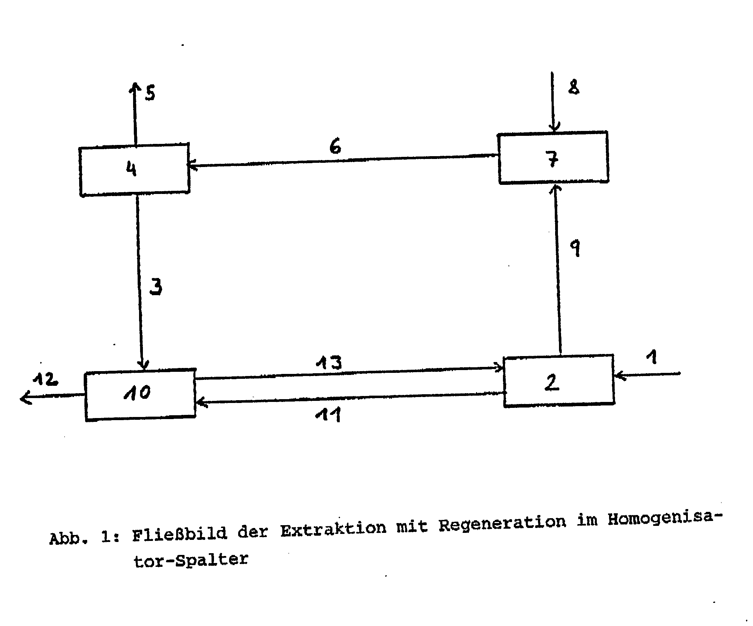

Das Aufspalten der stabilisierten Emulsion in ihre Einzelbestandteile im natürlichen Schwerefeld ist unbefriedigend. Es muß daher die Emulsion in einem konventionellen Emulsionsspalter, wie auch in der Erdölindustrie zum Spalten von Bohremulsionen verwendet, gespalten werden. Die beim erfindungsgemäßen Verfahren vorgesehene Kombination von üblicher Flüssig-Flüssig-Extraktion und Regeneration im Homogenisator-Spalter-Apparat ist in Abb. 1 dargelegt und in Bsp. 1 beschrieben.

Es gelangt die abzureichernde wäßrige Metallösung über Leitung (1) in den Mixer-Settler (2), wo sie mit einer Extrahierphase (13) behandelt wird, die aus einem Extraktionsmittel gebildet ist oder dieses enthält. In der Praxis liegt das Extraktionsmittel meist gelöst vor. Dies ist bekannt /2/.

Im Mixer-Settler (2) wird die Extrahierphase im Mischer vollständig mit Metall beladen, wobei das Metall vom Extraktionsmittel aus der wäßrigen Lösung aufgenommen wird. Im Settler werden die Phasen im Schwerefeld getrennt, und die abgereicherte wäßrige Metallösung (11) geht in den Mixer-Settler (10), und die vollständig beladene Extrahierphase (9) geht zur Regeneration (7). Die Metallösung (11) wird im Mixer-Settler (10) mit frischer Extrahierlösung (3) in gleicher Weise wie im Mixer-Settler (2) behandelt. Die zweifach abgereicherte Metallösung wird dabei über Leitung (12) abgezogen. Die teilweise beladene Extrahierphase (13) gelangt in den Mixer-Settler (2).

Die Regeneration der vollständig beladenen Extrahierphase (9) erfolgt mit Schwefelsäure (8) in einem Homogenisator (7). Das Metall aus der Extrahierphase wird dabei durch die Abstreifsäure freigesetzt.

Die Emulsion (6) aus beladener Abstreifphase und regenerierter Extrahierphase gelangt in einem Emulsionsspalter (4), wo sie in ihre Bestandteile zerlegt wird. Dies geschieht z.B. durch Hindurchleiten der Emulsion durch Plattenpakete oder Doppelwandrohre, wo zwischen den Platten oder Rohren eine Wechselspannung angelegt ist, die die Emulsion spaltet. Die angereicherte Abstreifsäure ist das zu gewinnende Metallkonzentrat und wird über die Leitung (5) abgezogen. Die regenerierte Extrahierphase (3) wird im Kreislauf dem Mixer-Settler (10) zugeführt. Zur Durchführung des erfindungsgemäßen Verfahrens benötigt man somit eine organische Extrahierphase, welche geeigneterweise 6 bis 25 % Bis-(2-ethylhexyl)-dithiophosphorsäure gelöst in technisch üblichen aromatischen oder aliphatischen Kohlenwasserstoffen enthält.

Die Vorteile des erfindungsgemäßen Verfahrens sind:
- die schwefelhältige Organophosphorverbindung, die Bis-(2-ethylhexyl)phosphorsäure, extrahiert Nickel auch bei niedrigen pH-Werten, sodaß extrem niedrige Raffinatkonzentrationen erzielt werden können.
- durch den Einsatz der Flüssig-Flüssg-Extraktion kann ein hochkonzentriertes Produkt gewonnen werden.
- durch die Regeneration der Extrahierphase im Homogenisator kann verdünnte Schwefelsäure als Abstreifsäure verwendet werden, wodurch als Produkt ein leicht handhabbares Nickelsulfat anfällt.
- kinetisch kontrollierte Systeme, die in einem konventionellen Mischer-Abscheider Apparat technisch nicht durchführbar sind, können mit der neuartigen Kombination Homogenisator-Emulsionsspalter behandelt werden.
- das Verfahren ist in der Lage, einerseits die behördlich geforderten Einleitwerte für Metallösungen zu garantieren, und andererseits selektiv angereicherte, saure Nickelsulfatlösungen zu produzieren.
- das Verfahren produziert weiterverwertbare Konzentrate und vermindert entscheident die Abwasserbelastung.

Tabelle 1

| Kinetischer Verlauf der Abstreiflösung von Nickel durch konventionelles Rühren und durch Homogenisieren (in % Regeneration). | | | | | | |
|---|---|---|---|---|---|---|
| Zeit (min) | 2 | 5 | 10 | 20 | 30 | 120 |
| Rühren | 1 | 3 | 8 | 17 | 20 | 20,5 |
| Homogenisieren | 5 | 28 | 42 | 42 | 42 | 42 |

Beispiele

Beispiel 1:

3

Es werden zwei Teile einer wäßrigen Nickelphase, die 0,45 g/l Nickel enthält und einen pH-Wert von 6,1 aufweist mit einem Teil organischer Extrahierphase behandelt, die 20 % Bis-(2-ethylhexyl)-dithiophosphorsäure, 0,7 % ECA 4360 sowie 79,3 % Shellsol T enthält. Die Behandlung erfolgt in zwei Gegenstromstufen in konventionellen Mischer-Abscheidern.

Die Austrittskonzentration der wäßrigen Phase beträgt 7 mg/l Ni in der ersten und 0,8 mg/l in der zweiten Mischer-Abscheiderstufe.

Die mit Nickel beladene organische Extrahierphase wird mit 250 g/l $H_2SO_4$ regeneriert. Es wird dazu ein Teil wäßriger Phase mit 50 Teilen beladener Extrahierphase homogeniesiert. Nach der Emulsionsspaltung erhält man eine schwefelsaure Produktphase mit 45,1 g/l Nickel und regenerierte Extrahierphase, die erneut zur Extraktion verwendet werden kann.

Beispiel 2:

Es wird ein Teil einer wäßrigen Nickelphase, die 1 g/l Nickel enthält und einem pH-Wert von 3,5 aufweist, mit einem Teil organischer Extrahierphase behandelt, die 20 % Bis-(2-ethylhexyl)-dithiophosphorsäure, 0,7 % ECA 4360 sowie 79,3 % Undekan enthält. Die Behandlung erfolgt in drei Gegenstromstufen in konventionellen Mischer-Abscheidern.

Die Austrittskonzentration der wäßrigen Phase beträgt im ersten 150 ppm Ni, im zweiten 8 ppm Ni und im dritten Mischer-Abscheider 1,2 ppm.

Die mit Nickel beladene Extrahierphase wird mit 5 mol/l $H_2SO_4$ regeneriert. Es wird dazu ein Teil wäßriger Phase mit 40 Teilen beladener Extrahierphase homogenisiert. Die dabei entstehende Emulsion wird in einem Emulsionsspalter zerlegt und man erhält eine Produktlösung mit einer Konzentration von 38,8 g/l Nickel. Die regenerierte Extrahierphase wird im Kreislauf zu den Extraktionsstufen rückgeführt.

Beispiel 3:

Es werden 3 Teile einer wäßrigen Nickelphase, die 1 g/l Nickel enthält und einen pH-Wert von 4,5 aufweist, mit einem Teil organischer Extrahierphase behandelt, die 20 % Bis-(2-ethylhexyl)-dithiophosphorsäure, 0,7 % ECA 4360 sowie 79,3 % Toluol enthält. Die Behandlung erfolgt in zwei Gegenstromstufen in konventionellen Mischer-Abscheidern.

Die Austrittskonzentration der wäßrigen Phase beträgt 45 mg/l Ni nach der ersten und 1,7, mg/l Ni nach der zweiten Extraktionsstufe.

Die mit Nickel beladene organische Extrahierphase wird mit 20 %-iger Schwefelsäure regeneriert. Es wird dazu ein Teil wäßriger Phase mit 15 Teilen beladener Extrahierphase kontaktiert. Der Kontakt erfolgt im Gegenstrombetrieb, wobei die Extrahierphase und Regeneriersäure in zwei folgenden Apparaten jeweils homogenisiert und die Emulsion jeweils gespalten werden. Aus dieser zweistufigen Regenerierung erhält man eine wäßrige Produktphase mit 45,1 g/l Nickel und eine regenerierte Extrahierphase, die erneut zur Emulsionsherstellung verwendet werden kann.

Beispiel 4:

Es werden 5 Teile einer wäßrigen Nickelphase, die 0,15 g/l Nickel enthält und einen pH-Wert von 5,5 aufweist, mit einem Teil organischer Extrahierphase behandelt, die 15 % Bis-(2-ethylhexyl)-dithiophosphorsäure, 0,7 % ECA 4360 und 84,3 % Shellsol T enthält. Die weitere Behandlung erfolgt in einer Anordnung wie in Beispiel 1.

Es wird dabei eine nickelhältige Abwasserphase mit 2,8 mg/l Nickel und eine Produktphase mit 37,5 g/l Nickel erhalten.

Literatur:

/1/ Ullmanns Enzyklopädie der techn. Chemie, 4. Aufl., Bd. 17, Verlag Chemie, Weinheim BRD

/2/ R. Marr, H.-J. Bart, Metallsalzextraktion, Chem.-Ing.-Technik 54 (1982) 119-129

/3/ Richtlinien für die Begrenzung von Abwasseremissionen, Bundesministerium für Land- und Forstwirtschaft Wien, Sept. 1981

/4/ H.-J. Bart, J. Draxler, R. Marr, Residence time selection in liquid membran permeation for copper recovery, Hydrometallurgy 19 (1988) 351 - 360

/5/ J.J. Jackobs, M. Allard, S. Benmo, J. Moreau, Nickel and Cobalt extraction using organic compounds, Europ.Pat. Off.Applied Techn. Series, Vol. IV, Pergamon Press, Oxford, 1985

/6/ T.C.Co, M.H.I. Baird, C. Hanson, Handbook of solvent extraction, Wiley Interscience, New York, 1983

/7/ R. Marr et al., Österr. Pat. Anmeldung A 17611/87

**Ansprüche**

1. Verfahren zur Abtrennung von Nickel aus Nickelionen enthaltenden verdünnten wäßrigen Lösungen mittels einer einen gelösten Ionenaustauscher enthaltenden organischen Extrahierphase, bei dem die wäßrige Lösung in einer konventionellen Extrahierapparatur, gegebenenfalls in mehreren Stufen, mit der organischen Extrahierphase behandelt wird, wonach die wäßrige Phase von der organischen Extrahierphase getrennt und die letztere zur Gewinnung einer aufkonzentrierten wäßrigen Lösung eines Nickelsalzes und einer regenerierten Extrahierphase mit einer Abstreifsäure behandelt wird,
dadurch gekennzeichnet, daß
die Behandlung der beladenen Extrahierphase mit der Abstreifsäure in einem Homogenisator erfolgt.

2. Verfahren nach Anspruch 1, dadurch gekennzeichnet, daß als Extrahierphase die Lösung einer Thiophosphorsäure in einem aromatischen oder aliphatischen Kohlenwasserstoff verwendet wird.

3. Verfahren nach Anspruch 2, dadurch gekennzeichnet, daß als Thiophosphorsäure Bis-(2-ethylhexyl)-dithiophosphorsäure in Form einer 6 bis 25%igen Lösung verwendet wird.

4. Verfahren nach einem der Ansprüche 1 bis 3, dadurch gekennzeichnet, daß als Abstreifsäure Schwefelsäure verwendet wird.

5. Verfahren nach einem der Ansprüche 1 bis 4, dadurch gekennzeichnet, daß eine Extrahierphase mit einem Gehalt an einem Emulsionsbildner verwendet wird, der die Phasentrennung im Homogenisator hemmt.

6. Verfahren nach Anspruch 5, dadurch gekennzeichnet, daß die im Homogenisator gebildete Emulsion in einem Emulsionsspalter in die regenerierte Extrahierphase und die wäßrige Nickelsalzlösung gespalten wird.

7. Verfahren nach einem der Ansprüche 1 bis 6, dadurch gekennzeichnet, daß die regenerierte Extrahierphase als Extrahierphase für eine nächste Extraktion in das Verfahren zurückgeführt wird.

Abb. 1: Fließbild der Extraktion mit Regeneration im Homogenisator-Spalter

EP 0 350 858 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 336 133  (M. FUNATSU et al.) <br> * Spalte 4, Zeilen 9-40 * <br> --- | 1 | C 22 B    3/26 <br> C 22 B    3/38 // <br> C 22 B   23/00 |
| A,D | CHEM.-ING.-TECH. <br> Band 54, Nr. 2, 1982, Seiten 119-129, <br> Weinheim, D; R. MARR et al.: <br> "Metallsalz-Extraktion" * Seite 128 * <br> --- | 1 | |
| A,D <br> P | EP-A-0 300 964  (KINEMATICA AG) <br> * Figur 4 * <br> --- | 1 | |
| A,D <br> P | WO-A-8 900 444  (M & T CHEMICALS INC.) <br> * Figur 3b * <br> --- | 1 | |
| A | US-A-4 283 290  (G. A. DAVIES) <br> * Anspruch 1 * <br> --- | | |
| A | DE-A-2 812 507  (FORSCHUNGSINSTITUT <br> BERGHOF GMBH) <br> * Anspruch 1 *         - <br> --- | | |
| A | ULLMANN <br> 3. Auflage, Band 1, Seiten 720-724, <br> 1951, Urban & Schwarzenberg, <br> München-Berlin; "Homogenisiermaschinen" <br> ----- | | |

**RECHERCHIERTE SACHGEBIETE (Int. Cl.5)**

C 22 B    3/26
C 22 B    3/38

**Der vorliegende Recherchenbericht wurde für alle Patentansprüche erstellt**

| Recherchenort | Abschlußdatum der Recherche | Prüfer |
|---|---|---|
| BERLIN | 12-10-1989 | SUTOR W |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes
    Dokument